# EUROPEAN PATENT APPLICATION

(11) **EP 4 672 408 A1**
(43) Date of publication of application: **31.12.2025**
(21) Application number: 25186015.1
(22) Date of filing: 27.06.2025
(51) Int. Cl.: H01M 10/0562, H01M 10/0565, H01M 10/052

(54) **COMPOSITE SOLID-STATE ELECTROLYTE**

(30) Priority: 28.06.2024 TW 113124408
(71) Applicant: Hon Hai Precision Industry Co., Ltd., 236038 New Taipei City (TW); SolidEdge Solution Inc., 300094 Hsinchu City (TW)
(72) Inventor: HUNG, Chen-Tsung, 300094 Hsinchu City (TW); LIU, Yu-Hsien, 300094 Hsinchu City (TW); CHANG, Tseng-Lung, 300094 Hsinchu City (TW)
(74) Representative: Mewburn Ellis LLP

(57) **Abstract**

The present disclosure provides a composite solid-state electrolyte. The composite solid-state electrolyte includes a lithium lanthanum zirconium tantalum oxide nanoparticle and Li₂PO₃F. The Li₂PO₃F coats an outer surface of the lithium lanthanum zirconium tantalum oxide nanoparticle, in which a weight ratio of the Li₂PO₃F to the lithium lanthanum zirconium tantalum oxide nanoparticle is larger than or equal to 5.

## Description

### BACKGROUND

### Field of Invention

The present disclosure relates to a composite solid-state electrolyte.

### Description of Related Art

The use of liquid-state electrolytes in conventional batteries has many disadvantages. For example, the solvents may volatilize easily or leak. The liquid-state electrolytes used in lithium batteries are also prone to problems such as lithium dendrites growing on the surface of the electrodes to cause short circuits. Although solid-state electrolytes can solve the problems to some extent, they may not be very efficient in conducting ions. In addition, the processes in manufacturing solid-state electrolytes may be harsh, for example, taking a long time and requiring a high temperature, and the quality may not meet expectations; for example, the surface stability is poor, such that the charging and discharging properties of the battery are affected. Therefore, it is necessary to develop a composite solid-state electrolyte based on a solid-state electrolyte and a method of manufacturing the composite solid-state electrolyte to solve the problems and further improve performance.

### SUMMARY

The present disclosure provides a composite solid-state electrolyte including a lithium lanthanum zirconium tantalum oxide nanoparticle and Li₂PO₃F coating an outer surface of the lithium lanthanum zirconium tantalum oxide nanoparticle, in which a weight ratio of the Li₂PO₃F to the lithium lanthanum zirconium tantalum oxide nanoparticle is larger than or equal to 5.

In some embodiments, the weight ratio of the Li₂PO₃F to the lithium lanthanum zirconium tantalum oxide nanoparticle is smaller than or equal to 10.

In some embodiments, an average particle size of the lithium lanthanum zirconium tantalum oxide nanoparticle is from 70 nm to 150 nm.

In some embodiments, the average particle size of the lithium lanthanum zirconium tantalum oxide nanoparticle is from 90 nm to 110 nm.

In some embodiments, the Li₂PO₃F and the lithium lanthanum zirconium tantalum oxide nanoparticle are connected through a covalent bond.

In some embodiments, the lithium lanthanum zirconium tantalum oxide nanoparticle includes LiₓLa₃Zr_{y}Ta_{z}O₁₂, x is from 6.4 to 6.8, y is from 1.4 to 1.8, and z is from 0.2 to 0.6.

In some embodiments, the lithium lanthanum zirconium tantalum oxide nanoparticle is Li_{6.4}La₃Zr_{1.4}Ta_{0.6}O₁₂.

In some embodiments, an intensity ratio of an impure phase diffraction peak of a crystal structure of the lithium lanthanum zirconium tantalum oxide nanoparticle to a strongest diffraction peak of the crystal structure of the lithium lanthanum zirconium tantalum oxide nanoparticle is smaller than 1/4, and a 2θ diffraction peak position of the impure phase diffraction peak is between 27° and 30°.

In some embodiments, a 2θ diffraction peak position of the strongest diffraction peak is between 15° and 18°, between 24° and 27°, between 30° and 32°, between 32° and 35°, or combinations thereof.

In some embodiments, a ratio of a chemical shift of an impurity to a chemical shift of the lithium lanthanum zirconium tantalum oxide nanoparticle in a Raman spectra of the composite solid-state electrolyte is smaller than 0.1, and the chemical shift of the impurity is from 1078 cm⁻¹ to 1098 cm⁻¹.

In some embodiments, the chemical shift of the lithium lanthanum zirconium tantalum oxide nanoparticle is from 350 cm⁻¹ to 370 cm⁻¹.

The present disclosure also provides a composite solid-state electrolyte including a lithium lanthanum zirconium tantalum oxide nanoparticle, Li₂PO₃F coating an outer surface of the lithium lanthanum zirconium tantalum oxide nanoparticle, and a fluorine-containing polymer, in which the lithium lanthanum zirconium tantalum oxide nanoparticle coated with the Li₂PO₃F is dispersed in a three-dimensional network structure formed by the fluorine-containing polymer.

In some embodiments, an average particle size of the lithium lanthanum zirconium tantalum oxide nanoparticle is from 70 nm to 150 nm.

In some embodiments, the fluorine-containing polymer includes polyvinylidene difluoride, a copolymer of vinylidene difluoride and hexafluoropropylene, or a combination thereof.

In some embodiments, an average molecular weight of the fluorine-containing polymer is from 400,000 Da to 2,000,000 Da.

In some embodiments, a weight ratio of the fluorine-containing polymer to the lithium lanthanum zirconium tantalum oxide nanoparticle is from 10% to 40%.

### BRIEF DESCRIPTION OF THE DRAWINGS

When reading the drawings attached to the present disclosure, it is recommended to understand the various aspects of the present disclosure from the detailed explanations provided below. It is noted that the dimensions of various features may not be drawn to scale, according to industry standard practice. In addition, for clarity, the dimensions of various features may be increased or decreased. To simplify the drawings, the conventional features and structures may be shown in a simple schematic manner.
Fig. 1A is a schematic cross-sectional diagram of a composite solid-state electrolyte according to some embodiments of the present disclosure.
Fig. 1B is a schematic diagram of a composite solid-state electrolyte according to some other embodiments of the present disclosure.
Fig. 2 is a schematic diagram of a flowchart of a method of manufacturing a composite solid-state electrolyte according to some embodiments of the present disclosure.
Figs. 3A and 3B are the X-ray diffraction patterns changing with temperatures according to some embodiments and some comparative embodiments of the present disclosure, respectively.
Fig. 4 is a comparison of X-ray diffraction patterns of some embodiments and some comparative embodiments according to the present disclosure.
Fig. 5 is the Raman spectra changing with the weight ratio of Li₂PO₃F to lithium lanthanum zirconium tantalum oxide nanoparticle according to some embodiments and some comparative embodiments of the present disclosure.
Fig. 6 is a diagram of the discharge capacity changing with the number of cycles according to some embodiments of the present disclosure.
Fig. 7 is a diagram of the change in the relation between the voltage and the capacity as the number of cycles increases according to some embodiments of the present disclosure.
Fig. 8 is a diagram of the change in the relation between the voltage and the capacity under different charge-discharge rates according to some embodiments of the present disclosure.

### DETAILED DESCRIPTION

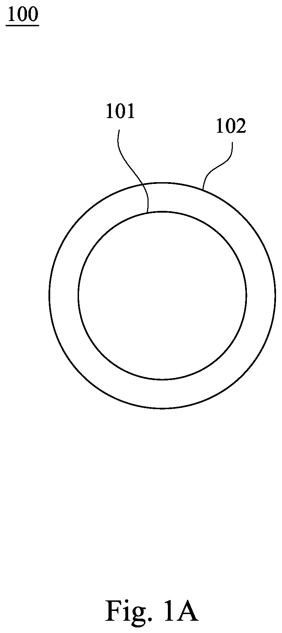

The present disclosure provides a composite solid-state electrolyte. The composite solid-state electrolyte includes a lithium lanthanum zirconium tantalum oxide nanoparticle and Li₂PO₃F. The Li₂PO₃F coats an outer surface of the lithium lanthanum zirconium tantalum oxide nanoparticle, in which a weight ratio of the Li₂PO₃F to the lithium lanthanum zirconium tantalum oxide nanoparticle is larger than or equal to 5. The performance of the composite solid-state electrolyte of the present disclosure is good when applied to batteries, for example, having high capacitance (up to 160 mAh/g), high Coulombic efficiency (up to 95%), good cyclic charging and discharging, fast charging and discharging (up to 1C), etc., in which the Li₂PO₃F significantly improves the performance of the composite solid-state electrolyte by coating on the lithium lanthanum zirconium tantalum oxide nanoparticle applied to batteries. Next, the composite solid-state electrolyte 100 is described in detail according to the embodiments and with reference to Fig. 1A.

First, the lithium lanthanum zirconium tantalum oxide nanoparticle 101 is described, as shown in Fig. 1A. The large surface area of the lithium lanthanum zirconium tantalum oxide nanoparticle 101 makes the lithium lanthanum zirconium tantalum oxide nanoparticle 101 have a good reaction rate and reactivity, so the application of the lithium lanthanum zirconium tantalum oxide nanoparticle 101 to batteries significantly improves the performance of the batteries, and using the lithium lanthanum zirconium tantalum oxide nanoparticle 101 together with other components makes the implementation easier and improve the associated performance. For example, the Li₂PO₃F 102 described below can be more easily and completely coated on the surface of the lithium lanthanum zirconium tantalum oxide nanoparticle 101 to improve the stability of the lithium lanthanum zirconium tantalum oxide nanoparticle 101 and thus improve the performance of the lithium lanthanum zirconium tantalum oxide nanoparticle 101 used in batteries. In some embodiments, the average particle size or the average diameter of the lithium lanthanum zirconium tantalum oxide nanoparticle 101 is preferably from 70 nm to 150 nm, for example, 70 nm, 80 nm, 90 nm, 100 nm, 110 nm, 120 nm, 130 nm, 140 nm, or 150 nm, and more preferably from 90 nm to 110 nm. When the average particle size or the average diameter is too small, the lithium lanthanum zirconium tantalum oxide nanoparticle 101 may be too small with a relatively thicker Li₂PO₃F 102 coating on the small lithium lanthanum zirconium tantalum oxide nanoparticle, thereby reducing the performance of the lithium lanthanum zirconium tantalum oxide nanoparticle 101 even though the lithium lanthanum zirconium tantalum oxide nanoparticle 101 may be protected by the Li₂PO₃F 102. When the average particle size or the average diameter is too large, the Li₂PO₃F 102 may not coat the large lithium lanthanum zirconium tantalum oxide nanoparticle properly to provide protection. When the average particle size or the average diameter is too small or too large, the lithium lanthanum zirconium tantalum oxide nanoparticle 101 may be hard to apply in a coating operation.

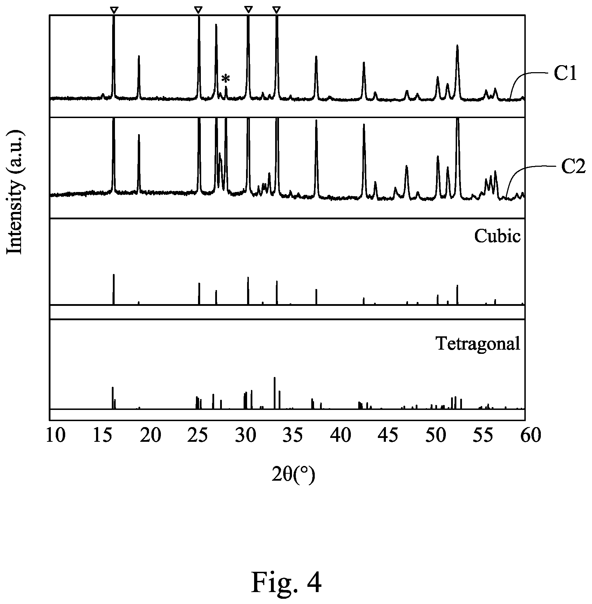

Continually describe the lithium lanthanum zirconium tantalum oxide nanoparticle 101 shown in Fig. 1A. In some embodiments, the lithium lanthanum zirconium tantalum oxide nanoparticle 101 includes LiₓLa₃Zr_{y}Ta_{z}O₁₂, where x is from 6.4 to 6.8, y is from 1.4 to 1.8, and z is from 0.2 to 0.6, in which Li_{6.4}La₃Zr_{1.4}Ta_{0.6}O₁₂ is preferred. The lithium lanthanum zirconium tantalum oxide nanoparticle 101 has a good crystalline phase and high crystalline phase purity to improve the ion-conducting efficiency of the lithium lanthanum zirconium tantalum oxide nanoparticle 101 when applied to batteries, thereby improving the performance of the batteries. In some embodiments, a crystal structure of the lithium lanthanum zirconium tantalum oxide nanoparticle 101 substantially belongs to a cubic crystal system. In some embodiments, the crystal structure of the lithium lanthanum zirconium tantalum oxide nanoparticle 101 is substantially a garnet-type crystal structure. In some embodiments, an intensity ratio of a impure phase diffraction peak of the crystal structure of the lithium lanthanum zirconium tantalum oxide nanoparticle 101 (e.g., a diffraction peak of a tetragonal crystal system or, for example, a diffraction peak indicated with "*" in Fig. 4) to a strongest diffraction peak of the crystal structure of the lithium lanthanum zirconium tantalum oxide nanoparticle 101 (e.g., a diffraction peak stronger in the cubic crystal system or, for example, diffraction peaks indicated with "V" in Fig. 4) is smaller than 1/4, smaller than 1/5, or smaller than 1/6, etc., to significantly improve the purity of the crystal structure. In some embodiments, a 2θ diffraction peak position of the impure phase diffraction peak described above is between 27° and 30°. In some embodiments, a 2θ diffraction peak position of the strongest diffraction peak described above is between 15° and 18°, between 24° and 27°, between 30° and 32°, between 32° and 35°, or combinations thereof. It should be noted that the above-mentioned "peak" is understood by one skilled in the art to be a signal that is significantly different from background noise, for example, the signal having a high signal-to-noise ratio. For example, the signal having a signal-to-noise ratio larger than 3 or higher may be clear enough to be judged as a "peak".

Next, the Li₂PO₃F 102 is described, as shown in Fig. 1A. The Li₂PO₃F 102 is coated on the outer surface of the lithium lanthanum zirconium tantalum oxide nanoparticle 101 to protect the lithium lanthanum zirconium tantalum oxide nanoparticle 101 inside and to prevent the lithium lanthanum zirconium tantalum oxide nanoparticle 101 from deteriorating when exposing to air to affect the performance and the subsequent applications. For example, the Li₂PO₃F 102 substantially isolates the lithium lanthanum zirconium tantalum oxide nanoparticle 101 from water vapor and carbon dioxide in the air to avoid the lithium lanthanum zirconium tantalum oxide nanoparticle 101 reacting with water vapor and/or carbon dioxide to form unexpected impurities on the surface of the lithium lanthanum zirconium tantalum oxide nanoparticle 101. The impurities not only affect the performance of the lithium lanthanum zirconium tantalum oxide nanoparticle 101, such as increasing the interface resistance, but also may cause negative effects on the subsequent applications. For example, the impurities including lithium carbonate have excessive alkalinity and may cause an unexpected defluorination reaction to the fluorine-containing compound (e.g., the fluorine-containing polymer described below) when the fluorine-containing compound is used with the lithium lanthanum zirconium tantalum oxide nanoparticle 101. **In** other words, the Li₂PO₃F 102 not only protects the lithium lanthanum zirconium tantalum oxide nanoparticle 101 but also stabilizes the lithium lanthanum zirconium tantalum oxide nanoparticle 101 to improve the performance of the lithium lanthanum zirconium tantalum oxide nanoparticle 101, such that the lithium lanthanum zirconium tantalum oxide nanoparticle 101 can also be used well for a long time. In addition, the Li₂PO₃F 102 can also improve the wettability of the lithium lanthanum zirconium tantalum oxide nanoparticle 101 to reduce interface resistance, etc. In some embodiments, the Li₂PO₃F 102 is uniformly coated on the outer surface of the lithium lanthanum zirconium tantalum oxide nanoparticle 101. In some embodiments, the Li₂PO₃F 102 is completely coated on the entirety of the outer surface of the lithium lanthanum zirconium tantalum oxide nanoparticle 101. In some embodiments, the Li₂PO₃F 102 is connected to the lithium lanthanum zirconium tantalum oxide nanoparticle 101 by a covalent bond. In some embodiments, the weight ratio of the Li₂PO₃F 102 to the lithium lanthanum zirconium tantalum oxide nanoparticle 101 is preferably larger than or equal to 5. In some embodiments, the weight ratio of the Li₂PO₃F 102 to the lithium lanthanum zirconium tantalum oxide nanoparticle 101 is preferably smaller than or equal to 10, and more preferably smaller than or equal to 8. When the weight ratio of the Li₂PO₃F 102 to the lithium lanthanum zirconium tantalum oxide nanoparticle 101 is too large, the lithium lanthanum zirconium tantalum oxide nanoparticle 101 may be too few and coated by a relatively too large amount of the Li₂PO₃F 102, thereby reducing the performance of the lithium lanthanum zirconium tantalum oxide nanoparticle 101 even though the lithium lanthanum zirconium tantalum oxide nanoparticle 101 may be protected by the Li₂PO₃F 102. When the weight ratio of the Li₂PO₃F 102 to the lithium lanthanum zirconium tantalum oxide nanoparticle 101 is too small, the Li₂PO₃F 102 may be too few to coat the lithium lanthanum zirconium tantalum oxide nanoparticle 101 properly to provide protection.

In some embodiments, the chemical shift of the lithium lanthanum zirconium tantalum oxide nanoparticle 101 in the Raman spectra of the composite solid-state electrolyte is from 350 cm⁻¹ to 370 cm⁻¹, for example, 350 cm⁻¹, 355 cm⁻¹, 360 cm⁻¹, 365 cm⁻¹, or 370 cm⁻¹. In some embodiments, the chemical shift of the Li₂PO₃F 102 in the Raman spectra of the composite solid-state electrolyte is from 1029 cm⁻¹ to 1049 cm⁻¹, for example, 1029 cm⁻¹, 1034 cm⁻¹, 1039 cm⁻¹, 1044 cm⁻¹, or 1049 cm⁻¹. In some embodiments, to reduce the unwanted impurity (e.g., lithium carbonate) coating on the lithium lanthanum zirconium tantalum oxide nanoparticle 101, which may perish the performance of the lithium lanthanum zirconium tantalum oxide nanoparticle 101 and reduce the amount of the Li₂PO₃F 102 coating on the surface of the lithium lanthanum zirconium tantalum oxide nanoparticle 101, the ratio of the chemical shift of the unwanted impurity to the chemical shift of the lithium lanthanum zirconium tantalum oxide nanoparticle 101 in the Raman spectra of the composite solid-state electrolyte is preferably smaller than 0.1, and the ratio of the chemical shift of the unwanted impurity to the chemical shift of the Li₂PO₃F 102 in the Raman spectra of the composite solid-state electrolyte is preferably smaller than 0.2, in which the chemical shift of the unwanted impurity is from 1078 cm⁻¹ to 1098 cm⁻¹, for example, 1078 cm⁻¹, 1083 cm⁻¹, 1088 cm⁻¹, 1093 cm⁻¹, or 1098 cm⁻¹.

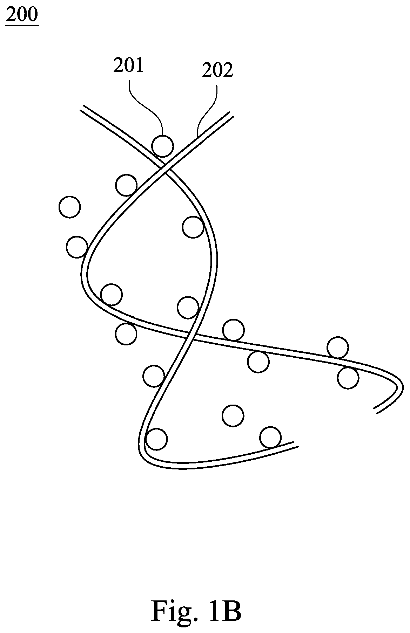

The present disclosure also provides a composite solid-state electrolyte including a lithium lanthanum zirconium tantalum oxide nanoparticle, Li₂PO₃F, and a fluorine-containing polymer. The Li₂PO₃F coats on an outer surface of the lithium lanthanum zirconium tantalum oxide nanoparticle. The lithium lanthanum zirconium tantalum oxide nanoparticle coated with the Li₂PO₃F is dispersed in a three-dimensional network structure formed by the fluorine-containing polymer. The performance of the composite solid-state electrolyte of the present disclosure is good when applied to batteries, for example, having high capacitance (up to 160 mAh/g), high Coulombic efficiency (up to 95%), good cyclic charging and discharging, fast charging and discharging (up to 1C), etc., in which the Li₂PO₃F coating on the lithium lanthanum zirconium tantalum oxide nanoparticle and the fluorine-containing polymer acting as a carrier of the lithium lanthanum zirconium tantalum oxide nanoparticle coated with the Li₂PO₃F significantly improve the performance of the composite solid-state electrolyte applied to batteries. Next, the composite solid-state electrolyte 200 is described in detail according to the embodiments and with reference to Fig. 1B.

First, the lithium lanthanum zirconium tantalum oxide nanoparticle coated with the Li₂PO₃F 201 is described, as shown in Fig. 1B. The lithium lanthanum zirconium tantalum oxide nanoparticle coated with the Li₂PO₃F is substantially the same as the lithium lanthanum zirconium tantalum oxide nanoparticle 101 coated with the Li₂PO₃F 102 described above, so the details can be referred to above and will not be repeated herein. As mentioned above, the Li₂PO₃F protects and stabilizes the lithium lanthanum zirconium tantalum oxide nanoparticle. In addition, the Li₂PO₃F can avoid alkaline lithium carbonate impurities present on the lithium lanthanum zirconium tantalum oxide nanoparticle to cause the defluorination reaction happened to the fluorine-containing polymer 202 that is described below, in which the defluorination reaction may increase the viscosity of the fluorine-containing polymer 202, such that it is difficult to be used in the subsequent applications, for example, difficult in coating. The Li₂PO₃F also avoids the hydrolysis of the fluorine-containing polymer 202 caused by acid inhibitors used to remove the alkaline lithium carbonate impurities from the lithium lanthanum zirconium tantalum oxide nanoparticle.

Next, the fluorine-containing polymer 202 is described, as shown in Fig. 1B. The fluorine-containing polymer 202 used as the carrier of the lithium lanthanum zirconium tantalum oxide nanoparticle coated with the Li₂PO₃F 201 improves the wettability, thereby reducing the interface resistance, etc. Owing to the properties of the polymer, the gel-like fluorine-containing polymer 202 also improves the adhesion and flexibility of the composite solid-state electrolyte 200, so the composite solid-state electrolyte 200 can be well adhered to the electrode and is suitable for use in flexible batteries. In some embodiments, the bonding force of the fluorine-containing polymer 202 causes the fluorine-containing polymer 202 to form a three-dimensional structure as a net, in which the lithium lanthanum zirconium tantalum oxide nanoparticle coated with the Li₂PO₃F 201 is uniformly dispersed in the three-dimensional structure. In some embodiments, the fluorine-containing polymer 202 includes polyvinylidene difluoride, a copolymer of vinylidene difluoride and hexafluoropropylene, or a combination thereof, in which the copolymer of vinylidene difluoride and hexafluoropropylene is preferable. In some embodiments, an average molecular weight of the fluorine-containing polymer 202 is preferably from 400,000 Da to 2,000,000 Da, for example, 400,000 Da, 800,000 Da, 1,300,000 Da, 1,700,000 Da, or 2,000,000 Da. In some embodiments, a weight ratio of the fluorine-containing polymer 202 to the lithium lanthanum zirconium tantalum oxide nanoparticle is preferably from 10% to 40%, for example, 10%, 15%, 20%, 25%, 30%, 35%, or 40%. In some embodiments, the fluorine-containing polymer 202 is spatially separated from the lithium lanthanum zirconium tantalum oxide nanoparticle by the Li₂PO₃F.

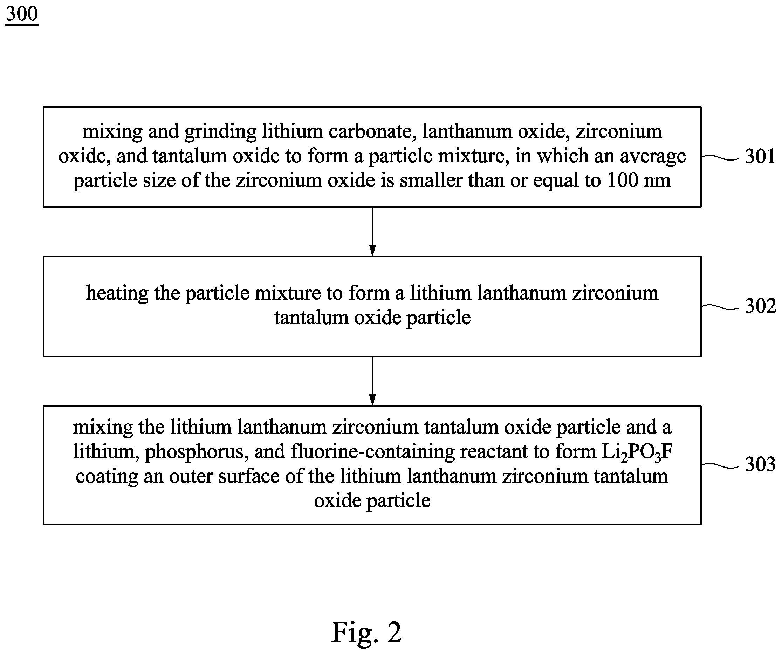

The present disclosure also provides a method of manufacturing the composite solid-state electrolyte described above. The method includes the following operations. Lithium carbonate, lanthanum oxide, zirconium oxide, and tantalum oxide are mixed and ground to form a particle mixture, in which an average particle size of the zirconium oxide is smaller than or equal to 100 nm. The particle mixture is heated to form a lithium lanthanum zirconium tantalum oxide particle (which can correspond to the lithium lanthanum zirconium tantalum oxide nanoparticle described above). The lithium lanthanum zirconium tantalum oxide particle and a lithium, phosphorus, and fluorine-containing reactant are mixed to form an outer surface of the lithium lanthanum zirconium tantalum oxide particle coated with Li₂PO₃F. The performance of the composite solid-state electrolyte manufactured by the method of the present disclosure is good when applied to batteries, for example, having high capacitance (up to 160 mAh/g), high Coulombic efficiency (up to 95%), good cyclic charging and discharging, fast charging and discharging (up to 1C), etc. The detailed characteristics of the composite solid-state electrolyte can be found above and will not be repeated herein. Next, the method 300 is described in detail according to the embodiments and with reference to Fig. 2.

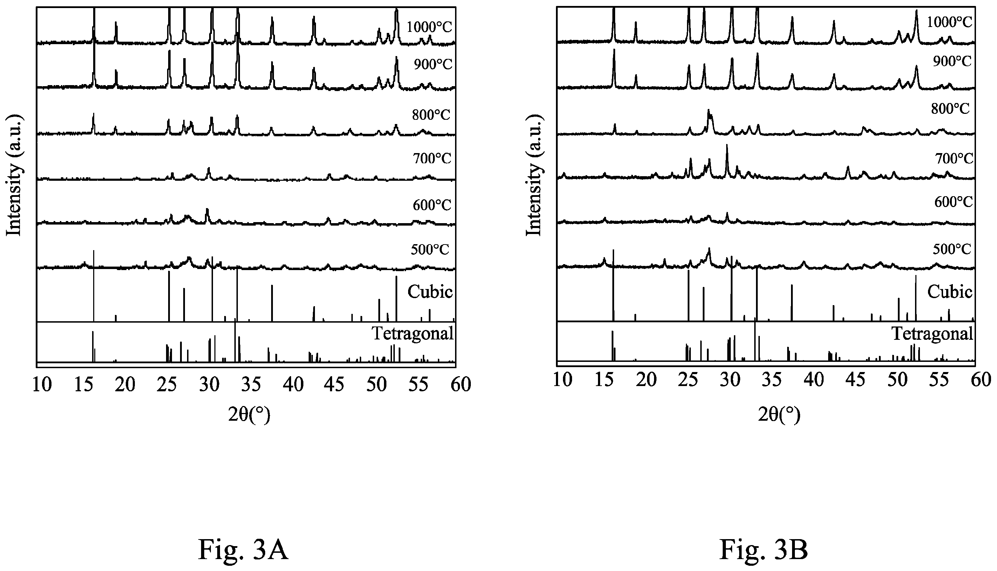

In the operation 301 of the method 300, the lithium carbonate (Li₂CO₃), lanthanum oxide (La₂O₃), the zirconium oxide (ZrO₂), and the tantalum oxide (Ta₂O₅) are mixed and ground to form the particle mixture. In some embodiments, the average particle size or the average diameter of the zirconium oxide before performing the grinding is from 5 nm to 100 nm, for example, 5 nm, 10 nm, 20 nm, 30 nm, 40 nm, 50 nm, 60 nm, 70 nm, 80 nm, 90 nm, or 100 nm, to make the operation 302 described below easier to implement, for example, with a lower reaction temperature and a shorter reaction time, etc. (see also the comparison between Figs. 3A and 3B), and to make the properties of the lithium lanthanum zirconium tantalum oxide particle formed in the operation 302 improve significantly, for example, by having a purer crystal structure (see also the comparison in Fig. 4). In some embodiments, the mixing and grinding in the operation 301 is performed by using a planetary ball mill machine, in which the planetary ball mill machine includes a sun wheel and at least one grinding tank disposed away from the center of the sun wheel and on the sun wheel, and the rotation direction of the sun wheel is opposite to the rotation direction of the grinding tank, so the grinding tank, like a planet, can rotate around the center of the sun wheel and around its own axis, and thus a grinding ball in the grinding tank can be subjected to superimposed rotational motions to grind the lithium carbonate, the lanthanum oxide, the zirconium oxide, and the tantalum oxide in the grinding tank with high-energy friction and impact. In some embodiments, an average rotational speed of the planetary ball mill machine is from 500 rpm to 1000 rpm, for example, 500 rpm, 600 rpm, 700 rpm, 800 rpm, 900 rpm, or 1000 rpm. In some embodiments, an average rotational time of the planetary ball mill machine is from 0.5 hours to 1.5 hours, for example, 0.5 hours, 1 hour, or 1.5 hours. In some embodiments, an organic volatile solvent is included in the grinding tank to uniformly disperse the lithium carbonate, the lanthanum oxide, the zirconium oxide, and the tantalum oxide to perform a wet grinding. In some embodiments, a preferred organic volatile solvent includes ethanol, N,N-dimethylacetamide, isopropanol, or combinations thereof. In some embodiments, the operation 301 is performed at room temperature, for example, from 20 °C to 30 °C, e.g., 20 °C, 22 °C, 24 °C, 26 °C, 28 °C, or 30 °C. In some embodiments, an average particle size or an average diameter of the particle in the particle mixture formed by the operation 301 is from 70 nm to 150 nm, for example, 70 nm, 80 nm, 90 nm, 100 nm, 110 nm, 120 nm, 130 nm, 140 nm, or 150 nm.

In the operation 302 of the method 300, the particle mixture formed in the operation 301 is heated to form the lithium lanthanum zirconium tantalum oxide particle by a solid-phase reaction. In some embodiments, the heating in the operation 301 includes performing a first heating process and a second heating process, in which the first heating process is performed before the second heating process to form a tetragonal crystal system of the lithium lanthanum zirconium tantalum oxide particle first in the first heating process, and then to form a cubic crystal system of the lithium lanthanum zirconium tantalum oxide particle easier and with high purity in the second heating process. In some embodiments, a first heating temperature of the first heating process is smaller than a second heating temperature of the second heating process. In some embodiments, the first heating temperature and the second heating temperature are independently from 500 °C to 1000 °C, for example, 500 °C, 600 °C, 700 °C, 800 °C, 900 °C or 1000 °C. In some embodiments, the first heating temperature is preferably from 860 °C to 960 °C, for example, 860 °C, 890 °C, 920 °C, 950 °C, or 960 °C, and the second heating temperature is preferably from 880 °C to 980 °C, for example, 880 °C, 910 °C, 940 °C, 970 °C, or 980 °C. In some embodiments, a difference between the first heating temperature and the second heating temperature is preferably from 10 °C to 70 °C, for example, 10 °C, 20 °C, 30 °C, 40 °C, 50 °C, 60 °C, or 70 °C. In some embodiments, a first heating time of the first heating process is larger than a second heating time of the second heating process. In some embodiments, the first heating time and the second heating time are independently from 2 hours to 12 hours, for example, 2 hours, 4 hours, 6 hours, 8 hours, 10 hours, or 12 hours. In some embodiments, the first heating time is preferably from 8 hours to 12 hours, and the second heating time is preferably from 3 hours to 9 hours, for example, 3 hours, 5 hours, 7 hours, or 9 hours. In some embodiments, the first heating process is performed under an air atmosphere, and the second heating process is performed under an oxygen atmosphere. In some embodiments, a drying process may be performed to volatilize the organic volatile solvent used in the operation 301 after performing the operation 301 and before performing the operation 302.

In the operation 303 of the method 300, the lithium lanthanum zirconium tantalum oxide particle and the lithium, phosphorus, and fluorine-containing reactant are mixed to form the outer surface of the lithium lanthanum zirconium tantalum oxide particle coated with the Li₂PO₃F, in which the lithium, phosphorus, and fluorine-containing reactant is used as a modifier. In some embodiments, the surface of the lithium lanthanum zirconium tantalum oxide particle reacts with water vapor and carbon dioxide in the air to form lithium carbonate, and lithium carbonate reacts with the lithium, phosphorus, and fluorine-containing reactant to form the Li₂PO₃F, so the Li₂PO₃F can stably and covalently bond to the surface of the lithium lanthanum zirconium tantalum oxide particle. In some embodiments, a weight ratio of the addition of the lithium, phosphorus, and fluorine-containing reactant to the addition of the lithium lanthanum zirconium tantalum oxide particle is preferably larger than or equal to 5. In some embodiments, a preferred lithium, phosphorus, and fluorine-containing reactant includes LiPO₂F₂. In some embodiments, the operation 303 includes performing the mixing in an organic solvent. In some embodiments, the organic solvent includes N,N-dimethylacetamide. In some embodiments, after performing the operation 303, the method 300 further includes mixing the lithium lanthanum zirconium tantalum oxide particle coated with the Li₂PO₃F with the fluorine-containing polymer.

Next, the composite solid-state electrolyte of the present disclosure and the method of manufacturing the same are explained by some detailed embodiments. For simplicity, only some detailed embodiments are provided, and the scope intended to be covered by the present disclosure is not limited by these detailed embodiments.

Fig. 3A is a diagram of the X-ray diffraction pattern of the particle mixture formed in the operation 301 according to an embodiment of the present disclosure, in which the crystal structure changes with increasing the temperature to heat the particle mixture. Fig. 3B is a diagram of the X-ray diffraction pattern of a particle mixture formed not by the operation 301 according to a comparative embodiment, in which the crystal structure changes with increasing the temperature to heat this particle mixture. In detail, the particle mixture of the embodiment was formed by the zirconium oxide with the average particle size within the range described above, while the particle mixture of the comparative embodiment was formed by zirconium oxide with the average particle size in micrometer size, and the rest of the processes to form the particle mixture were substantially the same in the embodiment and the comparative embodiment. From the comparison in Figs. 3A and 3B, the embodiment changed the crystal structure from a tetragonal crystal system to a cubic crystal system at a lower temperature (e.g., at 800°C), so the processing time in the embodiment could be correspondingly shortened. In other words, the operating 302 of the embodiment could perform heating at a lower temperature and in a shorter time. In addition, it should be noted that the X-ray diffraction patterns in Figs. 3A and 3B are mathematically normalized in order to compare the effects of different temperatures, so the intensities are unitless and indicated in arbitrary units (a.u.).

The line C1 in Fig. 4 is the X-ray diffraction pattern of the lithium lanthanum zirconium tantalum oxide particle of an embodiment of the present disclosure. The line C2 in Fig. 4 is the X-ray diffraction pattern of a lithium lanthanum zirconium tantalum oxide particle of a comparative embodiment different from the lithium lanthanum zirconium tantalum oxide particle of the present disclosure. In detail, the lithium lanthanum zirconium tantalum oxide particle of the embodiment was formed by the zirconium oxide with the average particle size within the range described above, while the lithium lanthanum zirconium tantalum oxide particle of the comparative embodiment was formed by zirconium oxide with the average particle size in micrometer size, and the rest of the processes to form the lithium lanthanum zirconium tantalum oxide particle are substantially the same. From the comparison in the line C1 and the line C2 in Fig. 4, the crystal structure in the cubic crystal system in the embodiment was obviously purer, for example, the intensity of the diffraction peaks marked with "V" significantly being larger than the diffraction peak marked with "*" (the detailed position of the diffraction peaks marked with "V" and "*" refers to the above and will not be repeated herein). In addition, it should be noted that the X-ray diffraction patterns in Fig. 4 are mathematically normalized in order to compare the line C1 and the line C2, so the intensities are unitless and indicated in arbitrary units (a.u.).

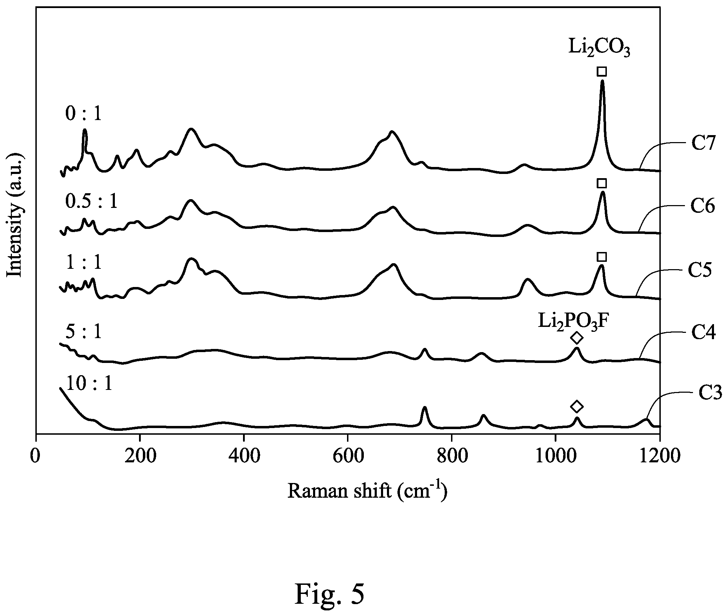

Fig. 5 is the Raman spectra of the composite solid-state electrolyte changing with the weight ratio of the Li₂PO₃F to the lithium lanthanum zirconium tantalum oxide nanoparticle according to some embodiments and some comparative embodiments. In Fig. 5, the line C3 (corresponding to the weight ratio of 10:1) and the line C4 (corresponding to the weight ratio of 5:1) in the **embodiments** have significant Raman shifts from the Li₂PO₃F (the positions are marked with "◊" in the figure) and there is almost no Raman shift from the impurities including lithium carbonate (the position marked with "□" in the figure) in the line C3 and the line C4, compared with the line C5 (corresponding to the weight ratio of 1:1), the line C6 (corresponding to the weight ratio of 0.5:1), and the line C7 (corresponding to the weight ratio of 0:1). In addition, it should be noted that the Raman spectra in Fig. 5 are mathematically normalized in order to compare the line C1, the line C2, the line C3, the line C4, and the line C5, so the intensities are unitless and indicated in arbitrary units (a.u.).

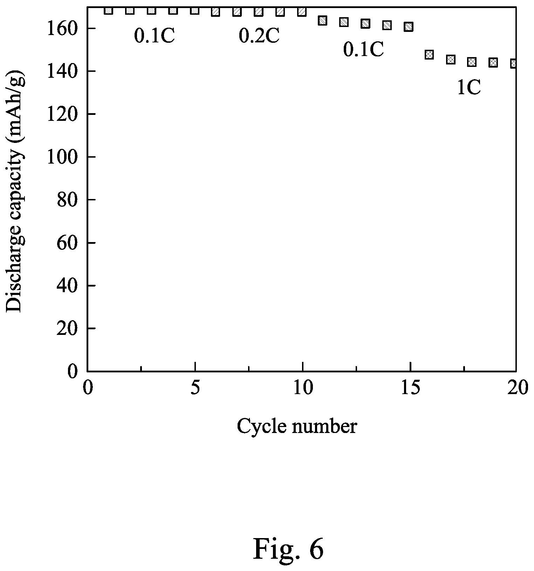

Fig. 6 is a diagram of the discharge capacity of the composite solid-state electrolyte applied to a lithium battery changing with the number of cycles according to some embodiments of the present disclosure. In Fig. 6, the composite solid-state electrolyte makes the lithium battery have a high discharge capacity, and the discharge capacities at different charge-discharge rates (C rates) have good repeatability and maintain at high values as the number of the charge-discharge cycles increases (different charge-discharge rates are marked with different square symbols in the figure).

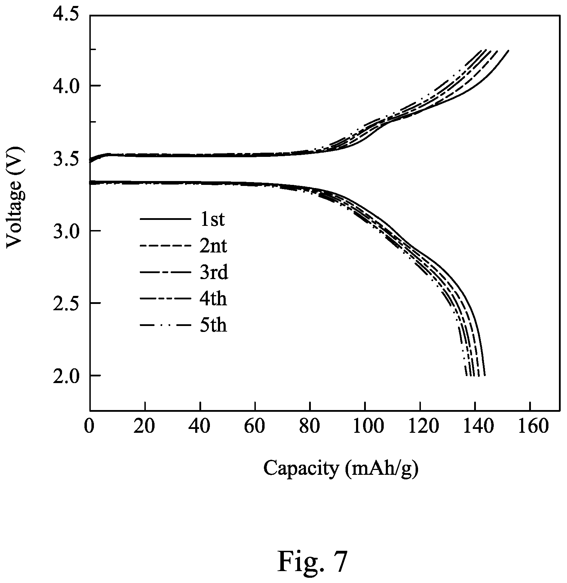

Fig. 7 is a diagram of the voltage and capacity changing with the number of cycles increases in the embodiment of the composite solid-state electrolyte of the present disclosure applied to a lithium battery. In Fig. 7, the change of voltage and capacity was highly repeatable with the increase in the number of cycles, so the cyclic charging and discharging performance was good.

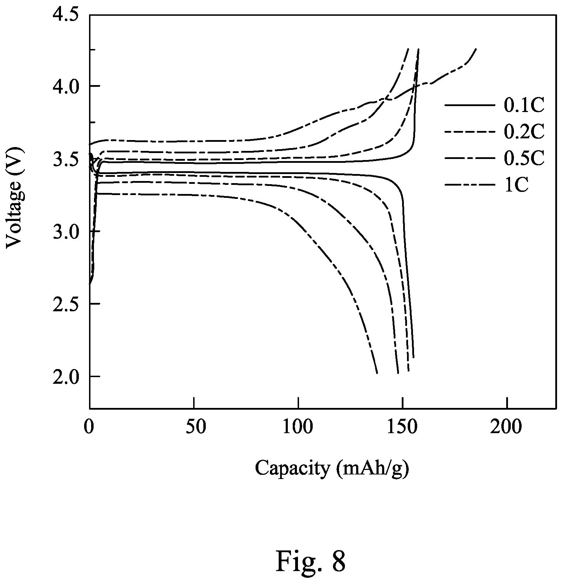

Fig. 8 is a diagram of the voltage and capacity changing at different charge-discharge rates in the embodiment of the composite solid-state electrolyte of the present disclosure applied to a lithium battery. In Fig. 8, the voltage not only changed well with the capacity at the charge-discharge rates of 0.1 C, 0.2 C, and 0.5 C, but also changed with the capacity at the charge-discharge rate of 1 C to quickly performing charging and discharging.

The composite solid-state electrolyte and the method of manufacturing the same make the composite solid-state electrolyte have good performance, for example, when applied in batteries, e.g., having high capacitance, high Coulombic efficiency, good cyclic charging and discharging, and fast charging and discharging. In addition, the Li₂PO₃F and the fluorine-containing polymer of the present disclosure significantly improve the performance of the composite solid-state electrolyte by coating on the lithium lanthanum zirconium tantalum oxide nanoparticle and by acting as a carrier, respectively. In addition, the composite solid-state electrolyte of the present disclosure is not a conventional liquid-state electrolyte, so the problems such as volatilization, leakage, and lithium dendrites can be avoided.

## Claims

1. A composite solid-state electrolyte (100), **characterized by** comprising:
a lithium lanthanum zirconium tantalum oxide nanoparticle (101); and
Li₂PO₃F (102) coating an outer surface of the lithium lanthanum zirconium tantalum oxide nanoparticle (101), wherein a weight ratio of the Li₂PO₃F (102) to the lithium lanthanum zirconium tantalum oxide nanoparticle (101) is larger than or equal to 5.

2. The composite solid-state electrolyte (100) of claim 1, **characterized in that** the weight ratio of the Li₂PO₃F (102) to the lithium lanthanum zirconium tantalum oxide nanoparticle (101) is smaller than or equal to 10.

3. The composite solid-state electrolyte (100) of claim 1 or claim 2, **characterized in that** an average particle size of the lithium lanthanum zirconium tantalum oxide nanoparticle (101) is from 70 nm to 150 nm.

4. The composite solid-state electrolyte (100) of claim 3, **characterized in that** the average particle size of the lithium lanthanum zirconium tantalum oxide nanoparticle (101) is from 90 nm to 110 nm.

5. The composite solid-state electrolyte (100) of any one of claims 1-4, **characterized in that** the Li₂PO₃F (102) and the lithium lanthanum zirconium tantalum oxide nanoparticle (101) are connected through a covalent bond.

6. The composite solid-state electrolyte (100) of any one of claims 1-5, **characterized in that** the lithium lanthanum zirconium tantalum oxide nanoparticle (101) comprises LiₓLa₃Zr_{y}Ta_{z}O₁₂, x is from 6.4 to 6.8, y is from 1.4 to 1.8, and z is from 0.2 to 0.6.

7. The composite solid-state electrolyte (100) of any one of claims 1-6, **characterized in that** an intensity ratio of an impure phase diffraction peak of a crystal structure of the lithium lanthanum zirconium tantalum oxide nanoparticle (101) to a strongest diffraction peak of the crystal structure of the lithium lanthanum zirconium tantalum oxide nanoparticle (101) is smaller than 1/4, and a 2θ diffraction peak position of the impure phase diffraction peak is between 27° and 30°.

8. The composite solid-state electrolyte (100) of claim 7, **characterized in that** a 2θ diffraction peak position of the strongest diffraction peak is between 15° and 18°, between 24° and 27°, between 30° and 32°, between 32° and 35°, or combinations thereof.

9. The composite solid-state electrolyte (100) of any one of claims 1-8, **characterized in that** a ratio of a chemical shift of an impurity to a chemical shift of the lithium lanthanum zirconium tantalum oxide nanoparticle (101) in a Raman spectra of the composite solid-state electrolyte (100) is smaller than 0.1, and the chemical shift of the impurity is from 1078 cm⁻¹ to 1098 cm⁻¹.

10. The composite solid-state electrolyte (100) of claim 9, **characterized in that** the chemical shift of the lithium lanthanum zirconium tantalum oxide nanoparticle (101) is from 350 cm⁻¹ to 370 cm⁻¹.

11. A composite solid-state electrolyte (200), **characterized by** comprising:
a lithium lanthanum zirconium tantalum oxide nanoparticle (101);
Li₂PO₃F (102) coating an outer surface of the lithium lanthanum zirconium tantalum oxide nanoparticle (101); and
a fluorine-containing polymer (202), wherein the lithium lanthanum zirconium tantalum oxide nanoparticle (101) coated with the Li₂PO₃F (102) is dispersed in a three-dimensional network structure formed by the fluorine-containing polymer (202).

12. The composite solid-state electrolyte (200) of claim 11, **characterized in that** an average particle size of the lithium lanthanum zirconium tantalum oxide nanoparticle (101) is from 70 nm to 150 nm.

13. The composite solid-state electrolyte (200) of claim 11 or claim 12, **characterized in that** the fluorine-containing polymer (202) comprises polyvinylidene difluoride, a copolymer of vinylidene difluoride and hexafluoropropylene, or a combination thereof.

14. The composite solid-state electrolyte (200) of any one of claims 11-13, **characterized in that** an average molecular weight of the fluorine-containing polymer (202) is from 400,000 Da to 2,000,000 Da.

15. The composite solid-state electrolyte (200) of any one of claims 11-14, **characterized in that** a weight ratio of the fluorine-containing polymer (202) to the lithium lanthanum zirconium tantalum oxide nanoparticle (101) is from 10% to 40%.
